# EUROPEAN PATENT SPECIFICATION

(11) **EP 2 581 217 B1**
(45) Date of publication and mention of the grant of the patent: **16.07.2014**
(21) Application number: 11184456.9
(22) Date of filing: 10.10.2011
(51) Int. Cl.: B32B 9/04, B32B 21/00, E06B 3/263, E06B 3/70

(54) **A frame for a window or the like manufactured from a laminate wooden profile**
Ein Rahmen für ein Fenster oder dergleichen aus einem Holzlaminatprofil
Châssis pour une fenêtre ou analogue, fabriqué à partir d'un profilé en bois stratifié

(43) Date of publication of application: 17.04.2013
(73) Proprietor: Rockwool International A/S, 2640 Hedehusene (DK)
(72) Inventor: Jørgensen, Kristian Skovgaard, 4000 Roskilde (DK)
(74) Representative: Høiberg A/S

(56) References cited:
- EP-A2- 2 397 620
- WO-A1-2011/012712
- WO-A1-2011/090442

## Description

The present invention relates to a frame for a window or the like according to claim 1.

In buildings, thermal insulation of walls, roofs and the like is well known. Likewise, thermal insulation of windows is well known. Accordingly, windows with double or triple glassing are widely used both in new buildings and retrofitted in existing buildings. However, thermal bridging in the window frames is often present as the frames are made of wooden profiles. This creates a relatively poorly insulated frame around the double or triple glassed window panel.

From e.g. WO 2011/090442 a composed wooden profile is known where the window frame profile is provided with an insert of thermal insulating filler such as polyurethane foam rather than being made solely of massive wood.

Although this composed wooden profile provides a better thermal insulation than a massive wooden profile, this type of profile suffers some drawbacks. Since only a small amount of the resulting frame profile is provided with thermal insulation filler, the insulation value is relatively low. Moreover, the machining of the laminated profile into the frame profile shape can be difficult since the machining characteristics of the insulation filler are very different than the wood. Therefore, such profile would require a customized manufacturing equipment as the profile is unsuitable for manufacturing on standard equipment. Furthermore foams may change mechanical and insulation properties over time, which may deteriorate the mechanical or insulation properties of the profile and window and result in reduced life time of the window.

On this background it is an object of the present invention to provide a frame for a window or the like manufactured from a laminate wooden profile which is easy to manufacture and which does not suffer from the above-mentioned drawbacks.

This object has been achieved by a frame according to claim 1.

Hereby, a frame for a window or the like manufactured from a laminate wooden profile with a good thermal insulation is provided which is cost effective in manufacturing and which has an improved insulation value compared with the hitherto known frames. Another advantage is that the mineral fibre wool is open for diffusion. Such frame may be suitable for providing a better insulated window frame or similar frame structures in a building, e.g. a door frame.

Windows sold on the Danish market should comply with technical requirements for Danish Window Certification (DVC) which is administered by Danish Technological Institute (DTI). The technical requirements relate to strength of the window, resistance to ingress of water etc. This means that any insulation added to a window sash or frame should not deteriorate the physical strength of the window.

According to claim 1 the insulation element is a mineral fibre composite having a density between 120 kg/m³ and 1000 kg/m³, particularly 250 kg/m³ and 600 kg/m³, for example 450-550 kg/m³ Accordingly, the mineral fibre board may be provided with similar characteristics as the wood making the profile easy to machine on standardized wood machining equipment. An example of such composite mineral fibre board is described in WO 2011/012712 A1.

Preferably, the mineral fibre composite is a mineral fibre board, preferably having a substantially uniform fibre orientation in a plane. The mineral fibre composite may comprise a high content of mineral wool fibres which is vacuum laid together with a small content of binder to form a relatively rigid and porous product.

In a preferred embodiment of the invention, two elongated wooden members are provided on each side of the elongated thermal insulation element and a wooden cover member is provided straddling said wooden members and the insulation element. Moreover, the two elongated wooden members may be either equal in width whereby the insulation element is centrally provided in the profile or be different in width whereby the insulation element is non-symmetrically provided in the profile. By the invention it is realized that it is advantageous to be able to design the profile with the insulation element at an appropriate position in relation to the actual frame design, so that the position of brackets and the like is such that the fastening does not penetrate into the mineral insulation element whereby standardized fastening means, such as screws, can be used.
By the invention it is realised that the insulation element may constitute 10 to 50% of the width of the profile. This provides for a wide variety of frame designs and the amount of insulation can be chosen according to the thermal insulation which is desired in an actual window frame construction. Likewise, the insulation element may preferably constitute 50-95% of the height of the profile.

The wooden members may be laminated in their longitudinal direction in any suitable manner. Moreover, the members and the insulation element are preferably glued together.

According to a further aspect of the invention, there is provided a window assembly comprising a frame according to any of the claims 1-9.

In the following the invention is described in more detail with reference to the accompanying drawings, in which:
- figure 1: is a schematic perspective view of a laminated wooden profile of a frame according to an embodiment of the invention;
- figure 2: is an end view thereof;
- figures 3 to 5: are schematic cross-sectional views of window frames according to the invention;
- figures 6 and 7: are cross-sectional scanning electron microscope (SEM) pictures of the preferred mineral fibre insulation material for the invention compared with other mineral fibre products; and
- figure 8 and 9: are histograms showing fibre directions in the preferred mineral fibre insulation material for the invention compared with conventional mineral fibre products.

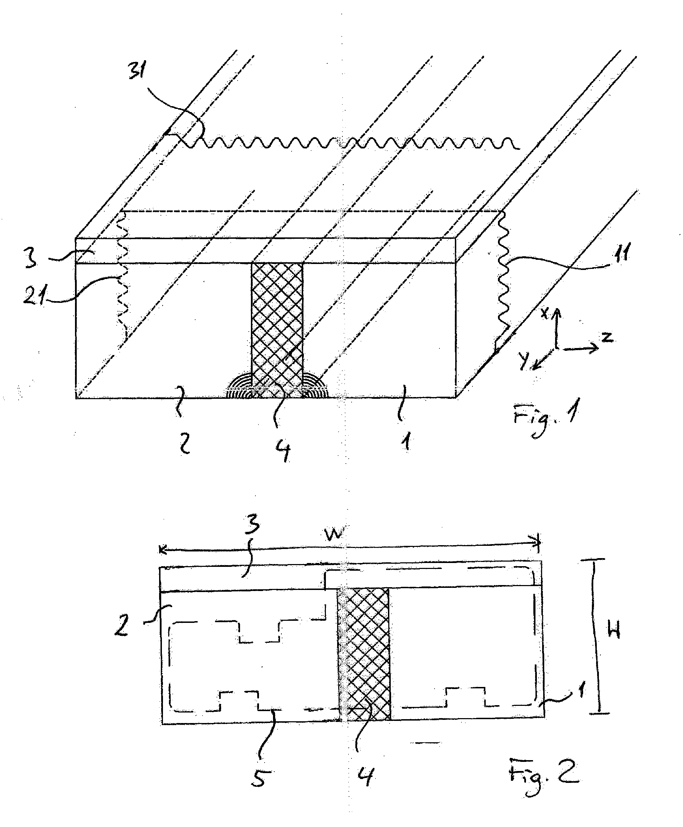

With reference to figures 1 and 2, an embodiment of a laminated wooden profile of a frame according to the invention is shown. The profile is made as an assembly of elongated wooden members 1, 2, 3 and an insulation element 4. As shown, a first wooden member 1 and a second wooden member 2 are provided on each side of the insulation member 4 with a top wooden member 3 covering the upper portion of the two wooden members 1, 2 and the insulation element 4. In the embodiment shown, the insulation member 4 is exposed on one of the exterior surfaces of the profile assembly. However, a lower cover member (not shown) could also be provided. By this assembly of members and insulation element, the profile has a total width W and a height H. The terms "width" and "height" used in this description are to be understood as relative terms and do not refer to any orientation of the profile when installed, but merely refers to the orientation in the figures 1 and 2.

The wooden members 1, 2, 3 as well as the insulation element 4 extend along the entire profile length. The wooden members 1, 2, 3 may be laminated by finger joins 11, 21, 31 as schematically shown in fig. 1. In particular the first and second wooden members are preferably made of core wood. All the members 1, 2, 3 and the insulation element 4 are glued firmly together along the entire length of the profile. In a prototype the interface between wooden members 1, 2, 3 and insulation element 4 was glued with an adhesive of the type Prefere 4535 of C4 quality and hardener Prefere 5046 (from Dynea). Other adhesives tested were Kauramin Glue 683 (BASF) and Aswood 7000 (Dynea). The adhesives were applied in an amount of 250 g/m².

As shown in fig. 2, the "raw" laminated wooden profile may be machined into a desired frame profile 5.

The insulation element 4 may constitute 10-50% of the width of the profile. Depending on the type of insulation fibre element used, one or more insulation elements may be provided adjacent each other. In the figures, only one element 4 is shown, but it is realised that any number of insulation elements may be provided, just as the number of wooden members 1, 2 may also be chosen in accordance with the desired design of the resulting frame profile 5.

The insulation element 4 is preferably a mineral fibre-containing element comprising a mineral fibre content in an amount of 80 to 95 wt % of the total weight of starting materials in the form of a collected web of mineral fibres, a binder in an amount of 5 to 20 wt % of the total weight of starting materials. The element is formed by subjecting the collected web of fibres to a disentanglement process, suspending the fibres in a primary air flow, and mixing the binder with the mineral fibres before, during or after the disentanglement process to form a mixture of mineral fibres and binder, and then collecting the mixture of mineral fibres and binder and pressing and curing the mixture to provide a consolidated composite with a density of from 120 kg/m³ to 1000 kg/ m³, such as 250 kg/ m³ to 600 kg/ m³, for example 450-550 kg/m³, more preferably approx. 500 kg/ m³.

This mineral fibre composite defined above is a versatile and cost efficiently manufactured mineral fibre-containing composite. By adjusting the density to which the element is pressed, a variety of different composites can be made that are tailor-made for specific purposes. By subjecting the mineral fibres to a fibre disentanglement process, compacted mineral fibres are opened up and the mineral fibres and binder are more evenly distributed in the element produced. This increased homogeneity in the element results generally in an increased level of mechanical strength relative to other mineral insulation products. The even distribution of fibres and binder in the element also has a desirable effect on the acoustic insulation properties of the element. It has also been found that the composites of the present invention as a result of their homogeneity can be machined in a similar way to wood, i.e. the composite can be machined in ordinary wood forming machinery, such as saws and shaping machines, e.g. grooving machines, surface milling cutters etc.

This mineral fibre composite is advantageous in applications where mechanical stability and an even surface finish as well as insulating properties are important. Preferably the thickness of the panel is from 4 to 25 mm. In some embodiments, the thickness of the panel is preferably from 12 to 25 mm, more preferably from 15 to 23 mm and most preferably from 18 to 21 mm, depending on the size of the frame profile and the amount of insulation which is to be encompassed in the window frame profile.

The amount of binder is chosen on the basis of desired cohesion, strength and cost, plus properties such as thermal insulation value. The low limit of 5 wt % results in a composite with a lower strength and cohesion, which is however adequate for some applications, and has the benefit of relatively low cost and potential for good thermal and acoustic insulation properties. In applications where a high mechanical strength is needed, a higher amount of binder should be used, such as up to the upper limit of 20 wt %, but this will increase the cost of the resulting product. For a majority of applications, a suitable composition will include a binder amount from 5 to 20 wt % or from 8 to 17 wt %. Most usually, a suitable quantity of binder will be from 10 to 15 wt %.

The mineral fibres (also known as man-made vitreous fibres or MMVF) used according to the present invention could be any mineral fibres, including glass fibres, ceramic fibres or stone fibres, but preferably stone fibres are used. Stone wool fibres generally have a content of iron oxide at least 3% and alkaline earth metals (calcium oxide and magnesium oxide) from 10 to 40%, along with the other usual oxide constituents of mineral wool. These are silica; alumina; alkali metals (sodium oxide and potassium oxide) which are usually present in low amounts; and can also include titania and other minor oxides. Fibre diameter is often in the range 2 to 10 microns, in particular 3 to 6 microns, as conventional.

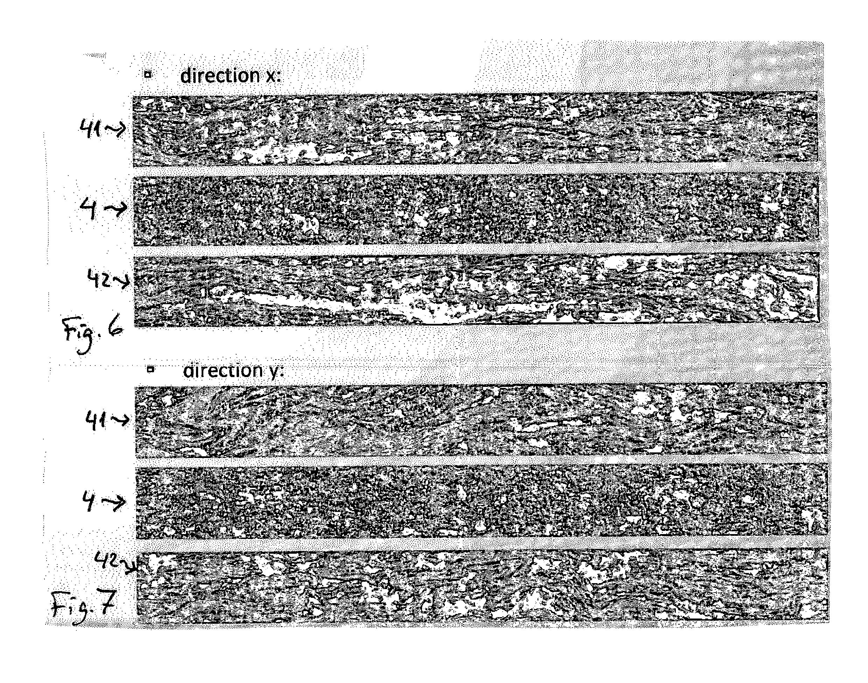

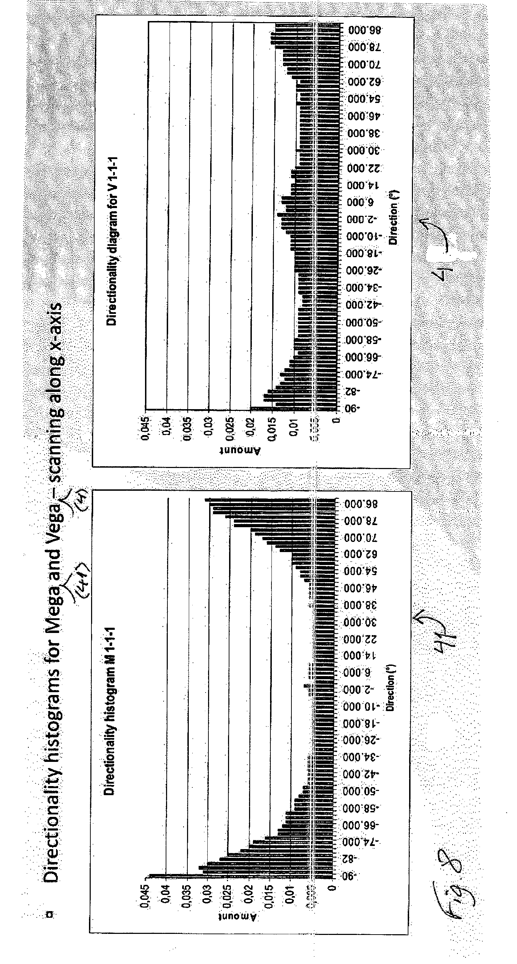

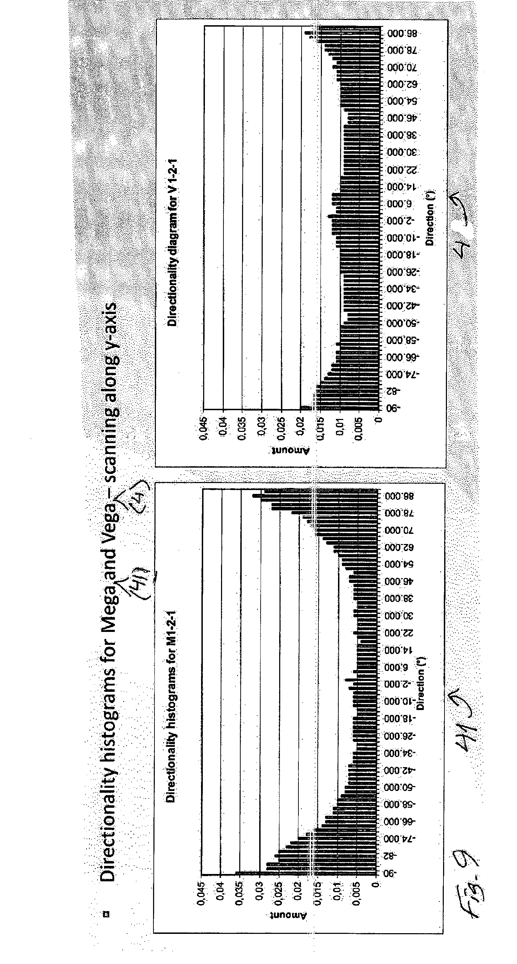

Preferably, the mineral fibres and binder together form at least 96%, more preferably at least 98% and most preferably substantially all of the total weight of starting materials. Although the composite is homogenous in its structure, since the collection of the mixture is carried out by a vacuum forming process and with subsequent pressing the resulting element may have an anisotropic structure with nearly isotropic fibre direction in a plane directed in x- and y-direction, and thereby being less homogeneous between these planes in z-direction, as can be seen in figures 8 and 9, which show the fibre orientation in the X and Y directions, respectively, for the preferred mineral fibre composite element 4 compared with another mineral fibre element 41. Returning the profile shown in the figures, the mineral fibre composite element 4 is therefore preferably oriented so that the layered structure is in the z-direction (see fig. 1) whereby the fibre structure is homogeneous in the x and y directions. In figures 6 and 7 scanning pictures of this preferred mineral fibre composite element 4 are shown in comparison with other types of mineral fibre elements 41, 42, where the elements 41 and 42 are pendulum formed elements.

**Tabel 1**

| **Direction** | **Porosity** | **Epoxy** | **Fiber** | **Thermal Conductance (Wm⁻¹k⁻¹)** | **Young's Modulus (GPa)** | **Poisson Ratio** |
|---|---|---|---|---|---|---|
| X | 0.726 | 0.032 | 0.242 | 0.17 | 3.87 | v_{xy} = 0.29 |
| | | | | | | v_{xz} = 0.21 |
| Y | 0.726 | 0.032 | 0.242 | 0.17 | 4.16 | v_{yx} = 0.31 |
| | | | | | | v_{yz} = 0.17 |
| Z | 0.726 | 0.032 | 0.242 | 0.11 | 1.43 | v_{zx} = 0.08 |
| | | | | | | v_{zy} = 0.06 |

As can be seen in table 1, the thermal conductance in Z-direction is much lower than in x-and y direction. This is important as this means that any thermal bridge in the Z-direction is broken, as the heat transport of a window will be from the inner side to the outer side or vice versa.

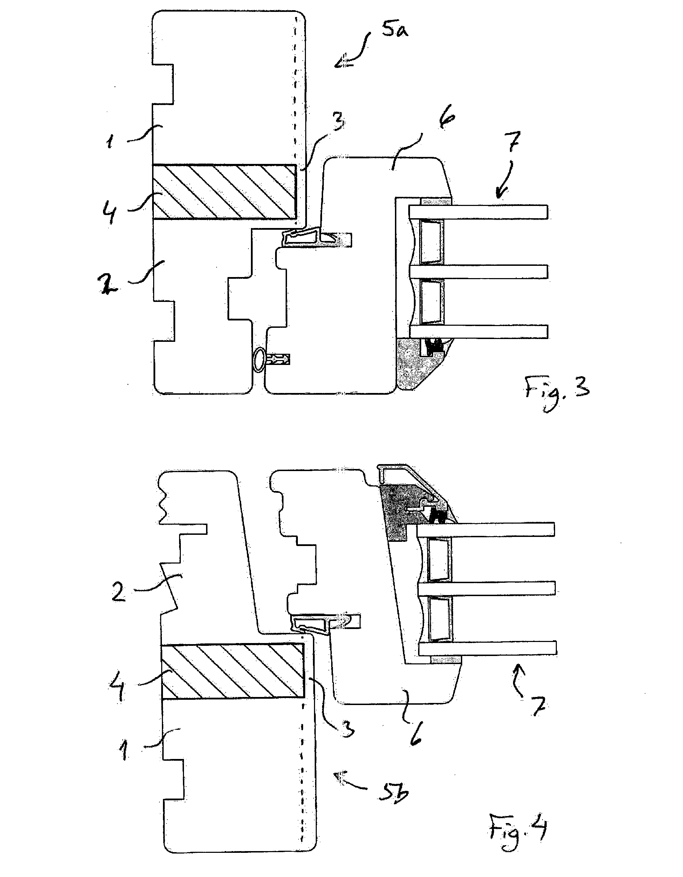

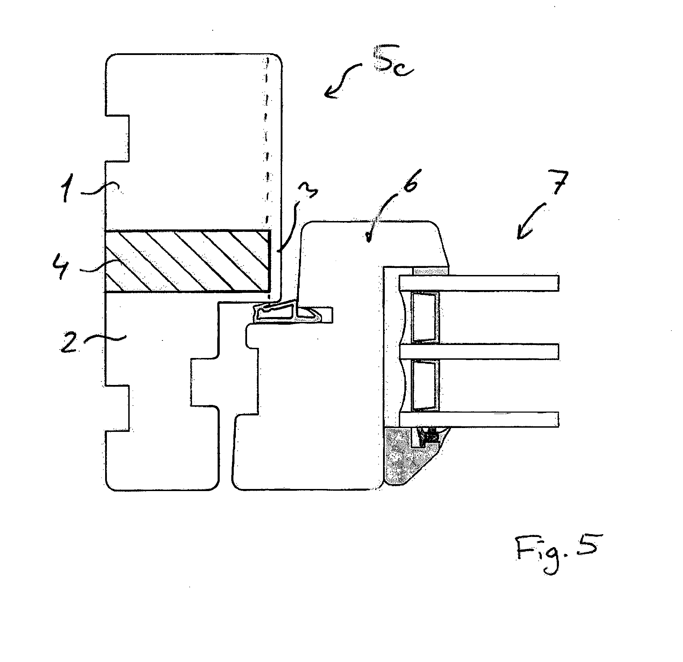

In figures 3 to 5 examples of window frame profiles 5a, 5b, 5c utilising the laminate profile according to the invention are shown. The frame profiles 5a, 5b, 5c may have different shapes depending on the types of windows to be achieved and according to which part of the frame is designed. In figure 3 an example of a side frame is shown, where the frame profile 5a is machined with the insulation element 4 between the wooden members 1, 2 and 3 in the configuration as shown in figures 1 and 2. The frame profiles 5a, 5b, 5c are thereby designed to receive and accommodate the window frame 6 on which the window glass panel 7 is mounted. Similarly, in figure 4 a bottom frame profile 5b is shown and in fig. 5 a top frame profile 5c is shown.

Above, the invention is described with reference to a preferred embodiment of the invention but it is apparent from the above description that variants and equivalents of the invention may be provided without departing from the scope of the invention as defined in the accompanying claims. Accordingly, it is realised by the invention that a laminated wooden frame profile according to the invention may also be used for other frame or sash constructions facing the exterior of a building, such as a door frame or the like, where any thermal bridging may also be wanted reduced.

## Claims

1. A frame for a window or the like manufactured from a laminate wooden profile, comprising a plurality of elongated wooden members having an elongated thermal insulation element therebetween,
**characterised in that**
the insulation element is made of mineral wool fibres and wherein the profile is machined into a predetermined cross-sectional shape, wherein the insulation element is a mineral fibre composite having a density between 120 kg/m³ and 1000 kg/m³, particularly 250 kg/m³ and 600 kg/m³, for example 450-550 kg/m³.

2. A frame according to claim 1, wherein the mineral fibre composite is a mineral fibre board, preferably having a substantially uniform fibre orientation in a plane.

3. A frame according to any of the preceding claims, wherein two elongated wooden members are provided on each side of the elongated thermal insulation element and a wooden cover member is provided straddling said wooden members and the insulation element.

4. A frame according to claim 3, wherein said two elongated wooden members are equal in width whereby the insulation element is centrally provided in the profile.

5. A frame according to claim 3, wherein said two elongated wooden members differs in /3 width whereby the insulation element is non-symmetrically provided in the profile.

6. A frame according to any of the preceding claims, wherein the insulation element constitutes 10-50% of the width of the profile.

7. A frame according to any of the preceding claims, wherein the insulation element constitutes 50-90% of the height of the profile.

8. A frame according to any of the preceding claims, wherein the wooden members may be laminated.

9. A frame according to any of the preceding claims, wherein the members and the insulation element are glued together.

10. A window assembly comprising a frame according to any of the claims 1 to 9.

## Patentansprüche

1. Rahmen für ein Fenster oder dergleichen, der aus einem laminierten Holzprofil hergestellt ist, aufweisend eine Vielzahl von länglichen Holzelementen mit einem dazwischen angeordneten länglichen thermischen Isolierelement,
**dadurch gekennzeichnet, dass**
das Isolierelement aus Mineralwollfasern besteht, wobei das Profil in einer vorbestimmten Querschnittsform verarbeitet ist, und wobei das Isolierelement ein Mineralfaser-Verbundstoff mit einer Dichte von zwischen 120 kg/m³ und 1000 kg/m³, insbesondere zwischen 250 kg/m³ und 600 kg/m³, z.B. zwischen 450-550 kg/m³, ist.

2. Rahmen nach Anspruch 1, bei dem der Mineralfaser-Verbundstoff eine Mineralfaserplatte, vorzugsweise mit einem im Wesentlichen gleichmäßigen Faserverlauf in einer Ebene, ist.

3. Rahmen nach einem der vorhergehenden Ansprüche, bei dem zwei längliche Holzelemente auf jeder Seite des länglichen thermischen Isolierelements vorgesehen sind und ein Abdeckelement aus Holz vorgesehen ist, das die Holzelemente und das Isolierelement überspannt.

4. Rahmen nach Anspruch 3, bei dem die beiden länglichen Holzelemente die gleiche Breite aufweisen, so dass das Isolierelement mittig in dem Profil vorgesehen ist.

5. Rahmen nach Anspruch 3, bei dem die beiden länglichen Holzelemente eine unterschiedliche Breite aufweisen, so dass das Isolierelement asymmetrisch in dem Profil vorgesehen ist.

6. Rahmen nach einem der vorhergehenden Ansprüche, bei dem das Isolierelement 10-50% der Breite des Profils einnimmt.

7. Rahmen nach einem der vorhergehenden Ansprüche, bei dem das Isolierelement 50-90% der Höhe des Profils einnimmt.

8. Rahmen nach einem der vorhergehenden Ansprüche, bei dem die Holzelemente laminiert sind.

9. Rahmen nach einem der vorhergehenden Ansprüche, bei dem die Elemente und das Isolierelement miteinander verklebt sind.

10. Fensteranordnung aufweisend einen Rahmen nach einem der Ansprüche 1 bis 9.

## Revendications

1. Châssis pour une fenêtre ou similaire fabriqué à partir d'un profilé en bois stratifié, comprenant une pluralité d'éléments en bois allongés ayant un élément d'isolation thermique allongé entre eux,
**caractérisé en ce que** :
l'élément d'isolation est réalisé à partir de fibres de laine minérale et dans lequel le profilé est usiné en une forme transversale prédéterminée,
dans lequel l'élément d'isolation est un composite de fibre minérale ayant une densité comprise entre 120 kg/m³ et 1000 kg/m³, en particulier 250 kg/m³ et 600 kg/m³, par exemple 450-550 kg/m³.

2. Châssis selon la revendication 1, dans lequel le composite de fibre minérale est une planche de fibre minérale, ayant de préférence une orientation de fibre sensiblement uniforme dans un plan.

3. Châssis selon l'une quelconque des revendications précédentes, dans lequel deux éléments en bois allongés sont prévus de chaque côté de l'élément d'isolation thermique allongé et un élément de couverture en bois est prévu à califourchon sur lesdits éléments en bois et l'élément d'isolation.

4. Châssis selon la revendication 3, dans lequel lesdits deux éléments en bois allongés sont identiques en largeur, moyennant quoi l'élément d'isolation est prévu au centre dans le profilé.

5. Châssis selon la revendication 3, dans lequel lesdits deux éléments en bois allongés sont différents du point de vue de la largeur, moyennant quoi l'élément d'isolation est prévu de manière non symétrique dans le profilé.

6. Châssis selon l'une quelconque des revendications précédentes, dans lequel l'élément d'isolation constitue 10-50 % de la largeur du profilé.

7. Châssis selon l'une quelconque des revendications précédentes, dans lequel l'élément d'isolation constitue 50-90 % de la hauteur du profilé.

8. Châssis selon l'une quelconque des revendications précédentes, dans lequel les éléments en bois peuvent être stratifiés.

9. Châssis selon l'une quelconque des revendications précédentes, dans lequel les éléments et l'élément d'isolation sont collés ensemble.

10. Ensemble de fenêtre comprenant un châssis selon l'une quelconque des revendications 1 à 9.
